# EUROPEAN PATENT SPECIFICATION

(11) **EP 1 477 069 B1**
(45) Date of publication and mention of the grant of the patent: **14.11.2007**
(21) Application number: 03702668.9
(22) Date of filing: 14.02.2003
(51) Int. Cl.: A23B 4/023, A23B 4/26

(54) **METHOD OF SALTING COD AND OTHER MARINE SPECIES**
VERFAHREN FÜR DAS EINSALZEN VON KABELJAU UND ANDEREN MEERESTIERARTEN
PROCEDE DE SALAISON DE MORUE ET D'AUTRES ESPECES MARINES

(30) Priority: 18.02.2002 ES 200200384
(43) Date of publication of application: 17.11.2004
(73) Proprietor: UNIVERSIDAD POLITECNICA DE VALENCIA, 46022 Valencia (ES)
(72) Inventor: BARAT BAVIERA, Jose Manuel Universidad, E-46022 Valencia (ES); ANDR S GRAU, Ana Universidad Politécnica de, E-46022 Valencia (ES); FITO MAUPOEY, Pedro Universidad Politécnica de, E-46022 Valencia (ES); SERRA BELENGUER, Juan Antonio Universidad, E-46022 Valencia (ES); RODRIGUEZ BARONA, Snyder Universidad Politécnica, E-46022 Valencia (ES)
(74) Representative: Temino Ceniceros, Ignacio
(86) International application number: PCT/ES2003/000084
(87) International publication number: WO 2003/067994

(56) References cited:
- WO-A1-95/15694
- ES-A1- 2 127 152
- ES-T3- 2 108 852

## Description

### Technical field:

Preservation of food products by salting.

### Background:

The preservation of solid foods, meats or fishery products by means of the salting operation has been well known and carried out since ancient times.

The efficacy of this operation lies in reducing the activity of the water contained in the salted food and in the bactericidal effect of salt.

The salting of fishery products may be light (marinating, smoking) or intense (cod, anchovy), the treatment being supplemented in some cases with subsequent drying.

In the fishery product salting procedures commonly applied solid salt is used (so-called dry cell process), or else a brine of a concentration appropriate to the degree of salting that we want to obtain. In the process of obtaining products with intense salting, the brine used normally has a saturation concentration, which corresponds to around 25% by weight.

In either of the two known procedures which have been described, the products obtained h ave an end weight lower than that of the fresh products, which reduces the yield of the operation.

When equilibrium is achieved in the salting process, the weight loss of the product is greater in case of using solid salt (around 25%) than if saturated brine is used (in the neighbourhood of 15%).

ES-A-2127152 describes a process to simultaneously thaw out and salting first or meat, wherein the salting process takes place by immersion of the pieces of meat or fish in brine of controlled concentration.

### Description of the invention

The end purpose of the invention that represents the object of this patent consists of overcoming the drawbacks described above, typical of known procedures for the salting of fishery products and it has been studied, planned, developed and tested in accordance with this primary aim.

The procedure is carried out in several sequential stages, in each of which the concentration of brine used is increased, being stirred and kept in continual circulation to homogenize it, while the temperature of the solution in the treatment tank is monitored.

The device for implementing the foregoing procedure described is composed of:
A reservoir for preparing the brine at the required concentration;
A pump for the forced circulation of the brine in the circuit between the preparation reservoir and the treatment tank;
A brine cooling system for keeping it at the optimum temperature;
A pump for forcing the flow of brine around the cooling system;
A treatment tank in which the pieces to be salted are kept immersed in the brine.

The device described above may be coupled in series with another or other identical ones to increase the output, although only one brine preparation reservoir may be used.

When applying the process that is the object of this patent to cod salting it has been found that after 15 days of treatment the weight loss of the end product is practically nil, while in the case of salting with saturated brine or with solid salt the weight loss was 15 and 25%, respectively.

Accordingly, the process proposed by this patent allows a considerable increase in the yield of the operations with the resulting advantages of an economic nature.

As regards the quality of the product, the sensorial analyses conducted on the cod samples obtained show that no significant differences are appreciated between the end products of the three processes compared.

### Brief description of the drawings:

To supplement the description of the invention and ease the interpretation of the structural and functional features of the device specially designed for the implementation of the process claimed, drawings are adjoined in which different aspects of the preferred embodiment of said device are represent diagrammatically.

In the aforesaid drawings:

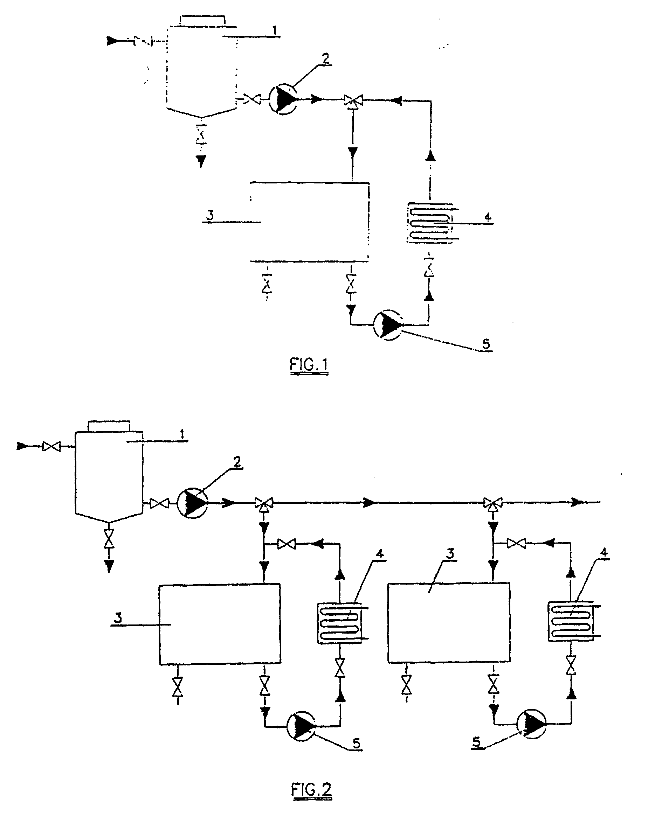

Figure 1 is a diagram in which the relative arrangement of the items making up the device are represented, showing the directions of circulation of the brine flows.
Figure 2 shows the layout corresponding to the serial coupling of two single devices, with the possibility of the optional and successive coupling of another or other identical ones.

### Description of a preferred embodiment:

To show clearly the nature and scope of the advantageous application of the "Process for salting cod and other marine species" which is the object of the invention claimed, we now go on to describe the operations comprising the process as well as the structure of the device for its implementation, making reference to the drawings which, through representing a preferred embodiment of said object, on a purely informative basis, should be considered in their broadest sense within the scope of claim 1.

The process is carried out in several sequential stages, in each of which the brine concentration used is increased, while it is kept in circulation by stirring in order to homogenize it and the temperature of the solution in the treatment tank is monitored.

The device for implementing the above-described procedure consists of:
A reservoir (1) for preparing the brine at the required concentration;
A pump (2) for the forced circulation of the brine in the circuit between the preparation reservoir (1) and the treatment tank (3);
A brine cooling system (4) for keeping it at the optimum temperature;
A pump (5) for forcing the flow of brine round the cooling system (4);
A treatment tank (3) in which the pieces to be salted are kept immersed in the brine.

The device described a bove may be coupled in series with a nother or other identical ones to increase the output, although only one brine preparation reservoir may be used.

## Claims

1. Process for salting cod and other marine species by immersion of the pieces in brine **characterised in that** it is performed in several sequential stages in each of which the concentration of the brine used is increased, keeping it in circulation by stirring so that it is homogenized and monitoring the temperature of the solution in the treatment tank.

## Patentansprüche

1. Verfahren zum Salzen von Kabeljau und anderen Meerestieren durch Eintauchen der Stücke in Salzlake, das sich **dadurch kennzeichnet, dass** es in mehreren aufeinanderfolgenden Stufen erfolgt, bei denen die Konzentration der verwendeten Salzlake jeweils erhöht wird, wobei die Umwälzung durch Rühren aufrechterhalten bleibt, damit die Lake homogenisiert ist und die Temperatur der Lösung im Behandlungstank überwacht wird.

## Revendications

1. Processus de salaison de morue et autres espèces marines par immersion des pièces dans de la saumure, **caractérisé par le fait qu'**il est réalisé en plusieurs phases séquentielles, la concentration de la saumure utilisée augmentant à chaque phase, et **par le fait que** la saumure est maintenue en circulation par agitation de sorte à l'homogénéiser et en surveillant la température de la solution dans le réservoir de traitement.
